# EUROPEAN PATENT APPLICATION

(11) **EP 1 152 269 A1**
(43) Date of publication of application: **07.11.2001**
(21) Application number: 00109600.7
(22) Date of filing: 05.05.2000
(51) Int. Cl.: G02B 6/25, G02B 6/38, B08B 7/00, B24B 19/22

(54) **Fibre optic termination arrangements**

(71) Applicant: Bayerische Motoren Werke Aktiengesellschaft, 80809 München (DE)
(72) Inventor: Popp, Gregor, 80797 München (DE)

(57) **Abstract**

A fibre optic termination arrangement is disclosed in which a socket housing (10) is crimped to a fibre optic (12). Access to an end face (16) of the fibre optic (12) is provided, so as to allow an end face treatment means to trim the end of the fibre optic (12) after assembly of the termination, so as to improve alignment with an associated pin and further fibre optic (not shown). In one embodiment of the invention, the socket (10) is provided with windows or slots (14) in its side. In a second embodiment of the invention, the end face treatment means comprises a laser and the socket (100) has at least a portion which is laser transparent so as to provide access to the end face (160) in similar fashion to access provided in the first embodiment.

## Description

This invention relates to fibre optic terminations and in particular to an arrangement for treating the end face of a fibre optic.

It is known to provide pin and socket connections for fibre optic cables. To meet the tolerances which are necessary for the relative positioning of the fibre optics forming the connection, it is preferable to use matched pairs of pins and sockets. To help achieve this, the end faces of the fibre optic cables forming the connection are treated by an end face treatment means.

One arrangement for treating the end faces of fibre optic cables is disclosed in US 4,587,768 (Doyle R R). In this arrangement, the fibre optic is treated before the termination is made. This might give rise to later problems with alignment, e.g. if either or both of the fibre optics forming the connection are terminated by being crimped into their pin/socket, either or both may move slightly out of axial alignment with the mating half. It should also be noted that if the end face is treated before assembly, a later check over the end face would be advisable in case of axial misalignment but may prove difficult because of poor accessibility into the socket.

In the case of the pin portion of a pin/socket connection, the fibre optic end face can be arranged to be relatively freely accessible after termination for end face treatment. The treatment of the fibre optic end face which is in a socket, however, may only be found to be possible with specially formed dies which are inserted into the socket.

It is an object of this invention to provide an improved end face termination arrangement.

Accordingly, the invention provides a fibre optic termination comprising a socket housing arranged in use to provide access to a fibre optic end face for an end face treatment means, characterised in that the access is provided through at least one radially defined aperture in the socket housing. The end face treatment means may comprise a laser.

The invention also provides a fibre optic termination comprising a socket housing arranged in use to provide access to a fibre optic end face for an end face treatment means, wherein the end face treatment means comprises a laser and the access is provided through a substantially laser transparent portion of the socket housing.

In either case, the fibre optic end face may be treated after the termination has been made.

The invention will now be described with reference to the accompanying drawings, in which:
Figure 1 is a plan view of a section through a fibre optic termination according to a first embodiment of the invention;
Figure 2 is a side view of a section through the fibre optic termination of Figure 1; and
Figure 3 is a section through a fibre optic termination according to a second embodiment of the invention.

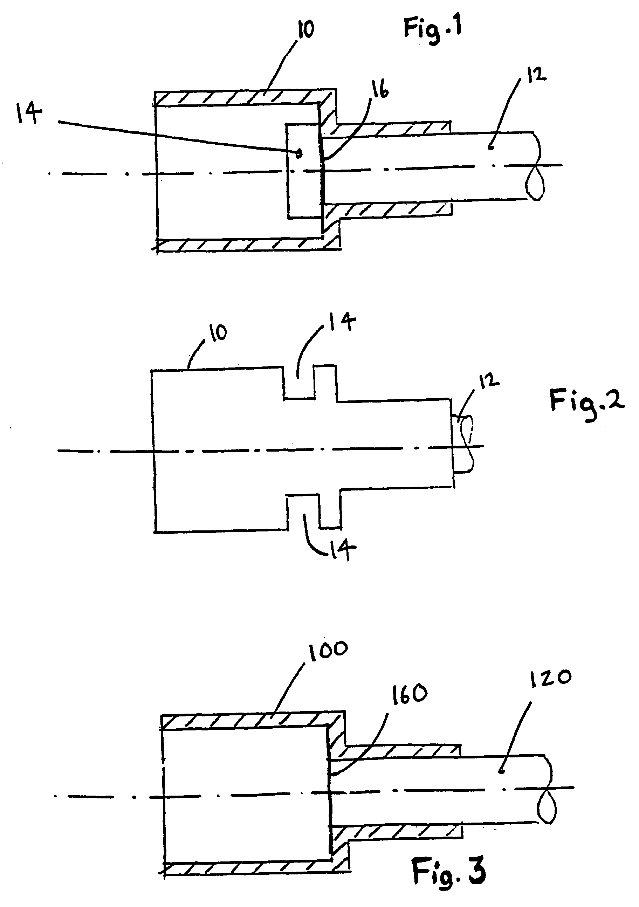

Referring now to Figures 1 and 2, a fibre optic termination comprises a socket 10 which is crimped to a fibre optic member 12 so that the socket 10 can co-operate with a pin (not shown) so as to join the fibre optic 12 in optical communication with a further fibre optic (not shown).

The socket 10 defines radially opposed apertures in the form of windows 14. The windows 14 allow substantially radial access to an end face 16 of the fibre optic 12 so that the end face 16 can be treated in order to assist with optical alignment with the further fibre optic. The end face 16 may be treated by an end face treatment means (not shown) which may advantageously be in the form of a laser.

Referring now to Figure 3, in a second embodiment of the invention a socket 100 is crimped to a fibre optic 120. The socket 100 is made from a material which is transparent to laser, so that a laser based end face treatment means (not shown) can be used to treat the end face 160. In similar fashion to the first embodiment, access to the end face 160 for treatment can be achieved radially.

In both embodiments it can be seen that the improved fibre optic termination allows end face treatment of the fibre optic after the fibre optic termination has been made. This avoids inaccuracies which might occur if the end face was treated before the termination was made and reduces axial off-set to a minimum. If the end face is treated before the termination is made, the invention allows post assembly correction of any minor inaccuracies which might be caused by the making of the terminations, e.g. through crimping. The improved accessibility to the end face 16, 160 also allows checking thereof after manufacture.

## Claims

1. A fibre optic termination comprising a socket housing (10) arranged in use to provide access to a fibre optic end face (16) for an end face treatment means, **characterised in that** the access is provided through at least one radially defined aperture (14) in the socket housing (10).

2. A fibre optic termination according to Claim 1, the end face treatment means comprising a laser.

3. A fibre optic termination comprising a socket housing (100) arranged in use to provide access to a fibre optic end face (160) for an end face treatment means, wherein the end face treatment means comprises a laser and the access is provided through a substantially laser transparent portion of the socket housing (100).

4. A fibre optic termination according to any preceding claim, wherein the fibre optic end face (16; 160) is treated after the termination has been made.
